# EUROPEAN PATENT APPLICATION

(11) **EP 0 982 876 A1**
(43) Date of publication of application: **01.03.2000**
(21) Application number: 98306799.2
(22) Date of filing: 25.08.1998
(51) Int. Cl.: H04B 7/185

(54) **Communications apparatus and method for handling short message for a telephone terminal**

(71) Applicant: ICO Services Ltd., London W6 9BN (GB)
(72) Inventor: Poisson, Lionel, London W4 1DD (GB)
(74) Representative: Musker, David Charles

(57) **Abstract**

A method of handling a short message for a telephone terminal (1), including a control circuit (37) and a removable processor (35), delivered via a communications network (4, 6, 70), comprising the steps of providing message alerting commands; inserting command data (2020) representing said commands and message data (2040, 2050) defining said message into a short message together with control data (2010) indicating that the message is for said removable processor (35); transmitting said short message to said terminal (2); at said terminal (2), passing said short message to said removable processor (35); at said removable processor (35a), reading said command data and commanding said control circuit (37) to carry out said commands.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow messaging and data communications in addition to voice communications. In the GSM system, a short message service (SMS) is provided for transmitting short messages to mobile terminals.

Paging communications involve the delivery of a notification to a user terminal (pager). More recent paging systems allow the transmission of short text messages.

In paging systems such as the European ERMES system, defined by the European Telecommunications Standards Institute (ETSI), each paging message can include a flag indicating the urgency, or priority, of the message, and the pager can be constructed to respond to such a flag depending upon its status, for example by responding silently to non-urgent messages and generating a beep for urgent messages.

In the GSM system, subscriber identity data is held in a removable card termed a Subscriber Identity Module (SIM). The SIM comprises a microprocessor, read only memory and random access memory, and communicates with the processor of the mobile terminal through a card reader. The communications in the basic GSM system are defined in recommendations 02.17 and 11.11, available from the European Telecommunications Standards Institute (ETSI).

In terrestrial mobile communications systems such as GSM, and DCS-1800 the Short Message Service (SMS) can similarly be used to send short text messages. Such messages are transmitted on a signalling channel, then stored in the removable Subscriber Identity Module (SIM) "smart card", and may be displayed by the user when desired. Many terminals will signal when such a message is received, for example by a beep.

In the original GSM system, the intention was to allow the processor of the mobile terminal to interrogate the SIM, to request data, which the SIM would then return. Such data could, for example, be authentication data, stored messages or telephone numbers.

More recently, draft GSM technical specification 11.14, version 5.6.0 of December 1997 defines a phase 2+ upgrade to the SIM - mobile terminal interface. The upgrade adds what is referred to as the "SIM application tool kit". This "tool kit" is a set of procedures which can be used by applications (i.e. control programs) running on the processor of the SIM. In particular, the SIM can initiate actions to be taken by the mobile terminal (such as causing the terminal to display text supplied by the SIM, or to send a short message, or to set up a voice call); downloading data to the SIM from a telecommunications network (using the short message service and cell broadcast mechanisms) and call control by the SIM (allowing the SIM to allow, bar or modify a call requested by the user through the mobile terminal).

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

There is no definition within the GSM SMS system of different urgency or priority modes, or of how terminals should respond thereto. Any other system (such as a satellite mobile communications system) has then to choose between deviating from GSM protocols (and incurring the substantial costs of redesigning its terminals and manufacturing their components at lower production runs, as well as the loss of value resulting from loss of compatibility) or not providing such modes.

The present invention is intended to address this situation, to provide a telephony system using short messages to emulate the urgency or priority status signalling similar to that used in pagers, whilst minimising incompatibility with GSM-like systems.

Accordingly, the present invention provides a method of handling a short message for a telephone terminal, including a control circuit and a removable processor, delivered via a communications network, comprising the steps of providing message alerting commands; inserting command data representing said commands and message data defining said message into a short message together with control data indicating that the message is for said removable processor; transmitting said short message to said terminal, at said terminal, passing said short message to said removable processor; at said removable processor, reading said command data and commanding said control circuit to carry out said commands.

In another aspect, the present invention provides a removable processor module for use in a telephony terminal, said module comprising a processor and memory, and being for communication with said terminal via a communications interface, said processor being arranged to receive a Short Message on a signalling channel, to extract therefrom alerting command data and message data and to issue commands to said terminal to cause a user thereof to be alerted, in accordance with the command data and to selectively output a message corresponding to the message data.

As well as achieving the above objects, the invention makes it possible to offer new facilities such as acknowledgements of reading by the user, automatic ringback and so on.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention:
Figure 2a is an illustrative is a block diagram showing schematically the elements of mobile terminal equipment suitable for use with the present invention; and

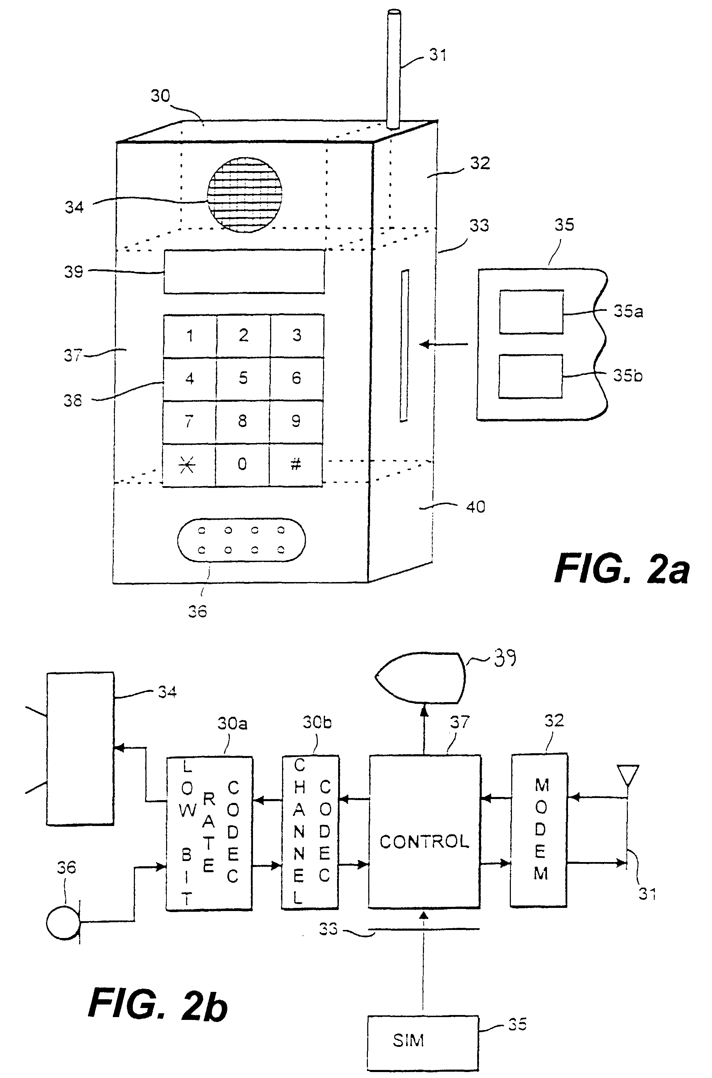

Figure 2a is a corresponding block diagram;

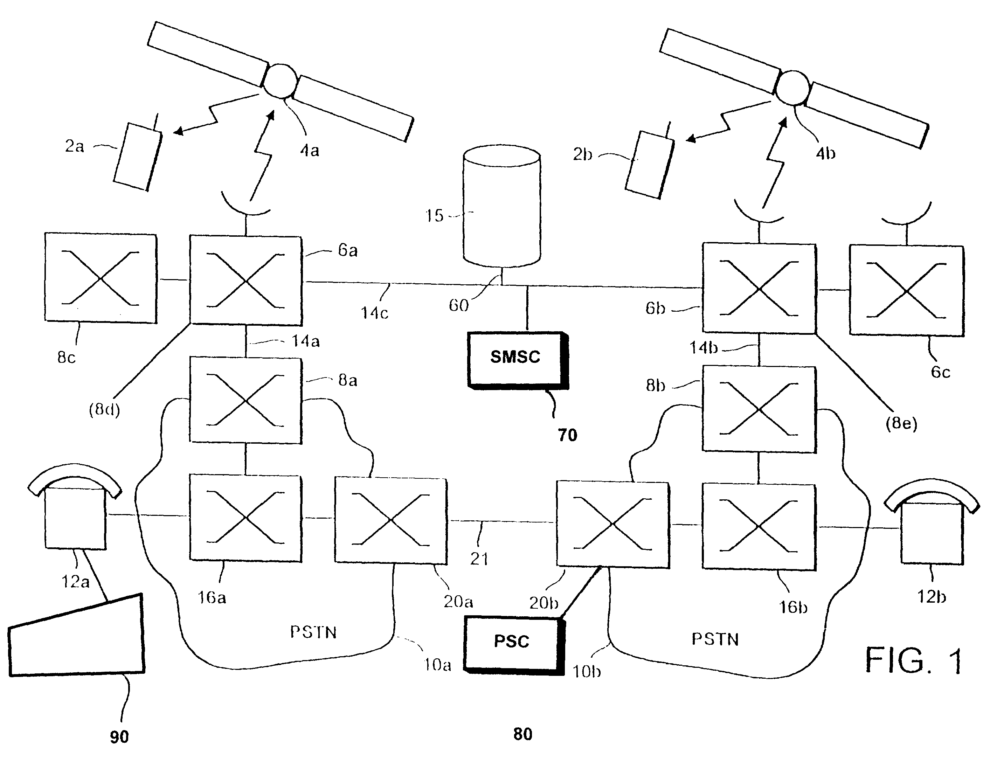

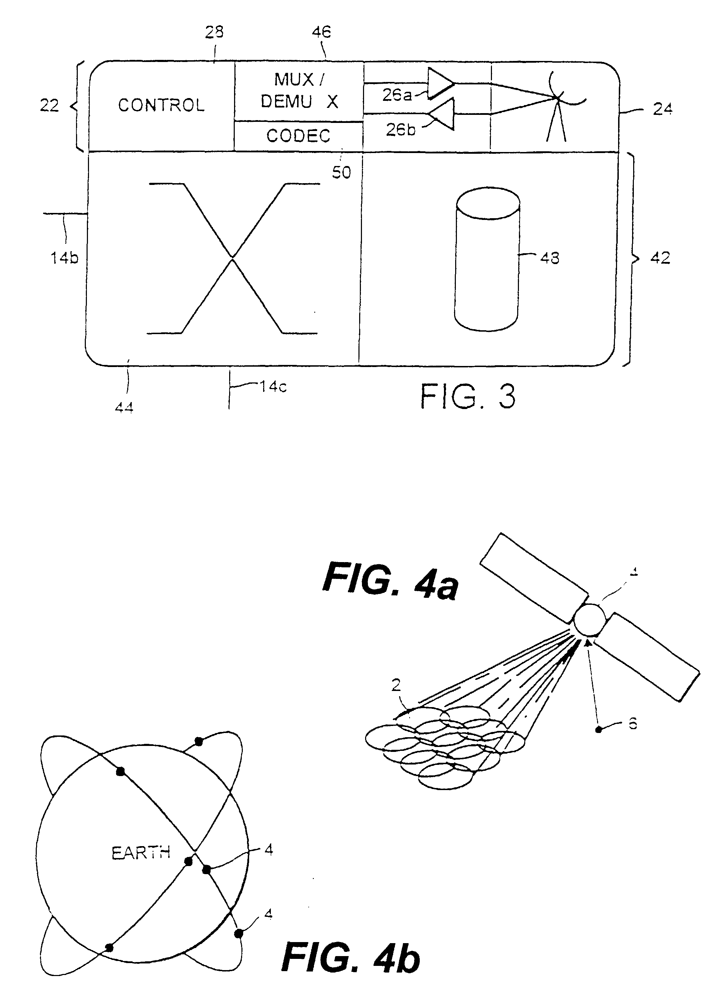

Figure 3 is a block diagram showing schematically the elements of an Earth station node forming part of the embodiment of Figure 1;
Figure 4a illustrates schematically the beams produced by a satellite in the embodiment of Figure 1;
Figure 4b illustrates schematically the disposition of satellites forming part of Figure 1 in orbits around the earth;

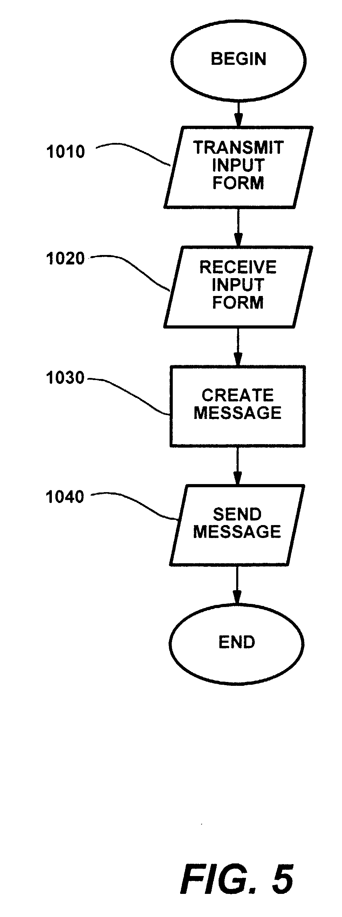

Figure 5 is a flow diagram showing schematically the process performed by the Short Message Centre of Figure 1 in sending a message according to a preferred embodiment;

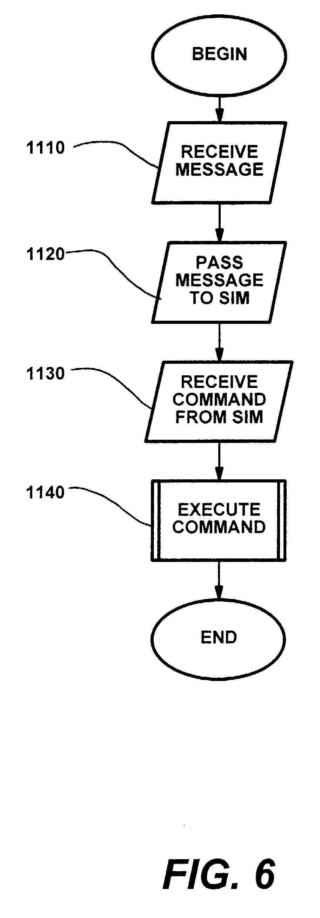

Figure 6 is a flow diagram showing schematically the process performed by the terminal processor of Figure 2 on receiving a message according to a preferred embodiment;

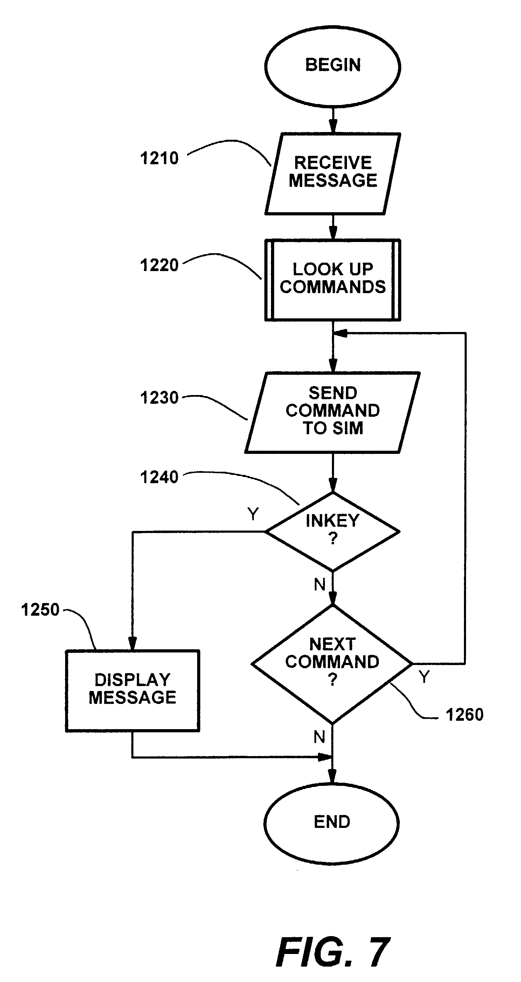

Figure 7 is a flow diagram showing schematically the process performed by the Subscriber Identity Module of Figure 2 on receiving a message according to a preferred embodiment;

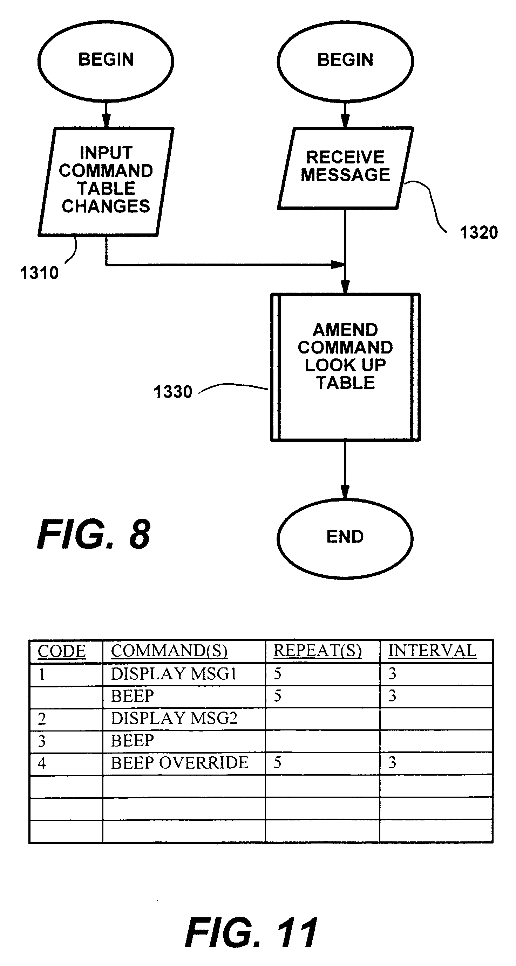

Figure 8 is a flow diagram showing schematically the process performed by the Subscriber Identity Module of Figure 2 on amending its mode of operation according to a preferred embodiment;

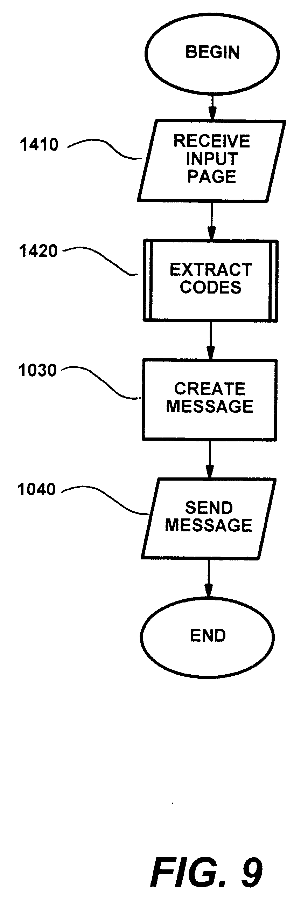

Figure 9 is a flow diagram showing schematically the process performed by the Short Message Centre of Figure 1 in converting a pager message according to a preferred embodiment;

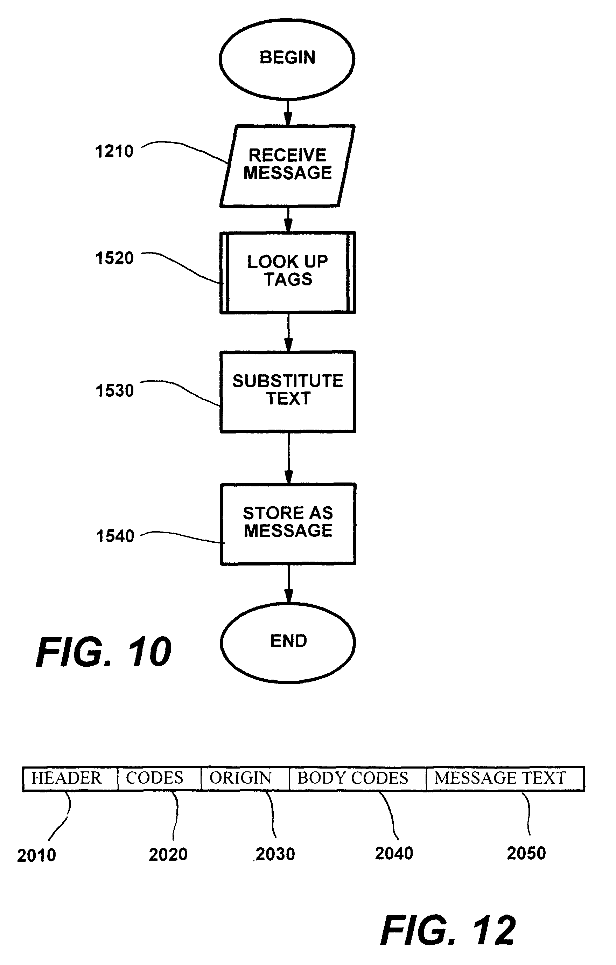

Figure 10 is a flow diagram showing schematically the process performed by the Subscriber Identity Module of Figure 2 on expanding text received in a message according to a preferred embodiment;
Figure 11 is a diagram showing schematically the contents of a Command Lookup Table stored within the memory of the Subscriber Identity Module of Figure 2 according to a preferred embodiment; and
Figure 12 is a diagram showing schematically the contents of a short message according to a preferred embodiment.

### GENERAL ASPECTS OF EMBODIMENTS

Referring to Figure 1, a satellite communications network according to this embodiment comprises mobile user terminal equipment 2a, 2b (e.g. handsets 2a and 2b); orbiting relay satellites 4a, 4b; satellite earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the earth station nodes 6a, 6b, and interconnecting the nodes 6a, 6b with each other, is a dedicated ground-based network comprising channels 14a, 14b, 14c. The satellites 4, earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transnational links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

A Short Message Service Centre (SMSC) 70, comprising a store, a computer, and a communications link to a data channel of the network, controls the sending of short messages to mobile terminals. Specifically, it receives messages, stores them, and forwards them for transmission.

Within the terrestrial networks, a Paging Service Centre (PSC) 80 provides control and administration of a terrestrial paging service. Coupled to a telephone terminal 12a (such as a telephone with a modem) is a message input terminal 90 such as a personal computer (PC) or a network computer (NC), for example operating a web browser and communicating with the PSC 80 and/or SMSC 70 using TCP/IP and Internet protocols such as Hypertext Transfer Protocol (http) through the terrestrial networks and Internet links.

### Mobile terminal 2

Referring to Figures 2a and 2b, a mobile terminal handset equipment 2a of Figure 1 is shown.

The handsets 2a, 2b may comprise handsets similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided. Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The SIM 35 preferably complies with GSM Recommendations and/or Technical Specifications 02.17 ("Subscriber Identity Modules"), 11.11 and 11.14, and is preferably implemented as an industry standard "Smart Card" as described in International Standards ISO 7810, 7811 and 7816; these and GSM 02.17,11.11 and 11.14 are all incorporated herein by reference.

The SIM memory 35b stores various subscriber identity data including the international mobile subscriber identity (IMSI), which is a unique number associated with that SIM (and hence the subscriberto whom it belongs).

In these embodiments, the SIM is not merely a passive information store, but is capable of acting pro-actively, and of communicating with the network through the terminal 2, using the SIM Toolkit procedures.

A suitable SIM can be developed using the SIMphonIC™ SIM Toolkit development system available from De La Rue Card Systems, UK, or the GemPlus GemXplore™ 98 and GemXplore™ CASE development systems available from GemPlus, or equivalent systems available from Siemens, Schlumberger, Giesecke und Devrient and others.

The terminal processor 37 is programmed to operate the GSM 11.14 interface, allowing it to be controlled by the SIM 35, and to pass data from and to the SIM 35. It may be based on an existing GSM terminal which can do so, for example the Siemens S10, the Alcatel One Touch Pro, the Motorola CD90 or CD930, or the Ericsson 688 or 888, together with a suitable Air Interface for satellite communications.

Accordingly, the terminal processor 37 can interrogate the memory 35b of the SIM 35, and the SIM processor 35a can command the terminal processor 37 to execute commands defined in the SIM Toolkit, via the reader interface 33.

### Earth Station Node 6

The earth station nodes 6 are arranged for communication with the satellites.

Each earth station node 6 comprises, as shown in Figure 3, a conventional satellite earth station 22 consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The earth station node 6 further comprises a mobile satellite switching centre 42 comprising a network switch 44 connected to the trunk links 14 forming part of the dedicated network. A multiplexer 46 is arranged to receive switched calls from the switch 44 and multiplex them into a composite signal for supply to the amplifier 26 via a low bit-rate voice codec 50. Finally, the earth station node 6 comprises a local store 48 storing details of each mobile terminal equipment 2a within the area served by the satellite 4 with which the node 6 is in communication.

### Gateway 8

The gateway stations 8a, 8b comprise, in this embodiment, commercially available mobile switch centres (MSCs) of the type used in digital mobile cellular radio systems such as GSM systems.

The gateway stations 8 comprise a switch arranged to interconnect incoming PSTN lines from the PSTN 10 with dedicated service lines 14 connected to one or more Earth station nodes 6.

### Database Station 15

The database station 15 comprises a digital data store, a signalling circuit, a processor interconnected with the signalling circuit and the store, and a signalling link interconnecting the database station 15 with the gateway stations 8 and Earth stations 6 making up satellite system network, for signalling or data message communications.

It stores data for terminal apparatus 2, for example position data, billing data, authentication data and so on, like the Home Location Register (HLR) of a GSM system.

### Satellites 4

The satellites 4a, 4b comprise generally conventional communications satellite buses such as the HS601 available from Hughes Aerospace Corp, California, US, and the payload may be as disclosed in GB 2288913. Each satellite 4 is arranged to generate an array of beams covering a footprint beneath the satellite, each beam including a number of different frequency channels and time slots, as described in GB 2293725 and illustrated in Figure 4a.

On each beam, the satellite therefore transmits a set of downlink frequencies. The downlink frequencies on adjacent beams are different, so as to permit frequency re-use between beams. Each beam therefore acts somewhat in the manner of a cell of a conventional terrestrial cellular system. For example, there may be 61, 121 or 163 beams

In this embodiment each downlink frequency carries a plurality of time division channels, so that each mobile terminal 2 communicates on a channel comprising a given time slot in a given frequency.

Within each beam there is also provided a common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, 10,500 kilometres (6 hour orbits) as shown in Figure 4b. Equally, however, larger numbers of lower satellites may be used, as disclosed in EP 0365885, or other publications relating to the Iridium system, for example.

Thus far, the operation of the invention corresponds generally to an adaptation to the satellite environment of the terrestrial GSM system.

### FIRST EMBODIMENT

A first embodiment of the invention will now be described. In this embodiment, the SIM 35 contains a processor 35a which supports the SIM toolkit protocols. Accordingly, it operates under control of an operating system 352 and an application 354, both of which are stored in the memory 35b.

The operating system is arranged to communicate with the processor 37 of the terminal 2 using the SIM toolkit procedures defined in GSM recommendation 11.14, to pass data to and from the application 354. It may for example be the STARSIM operating system of Giesecke und Devrient, Munich, Germany, or that of one of the other suppliers identified above.

### Message input

Referring to Figure 5, the process of message input will be disclosed.

On being accessed by a message input terminal 90, in a step 1010, the SMSC 70 transmits in response an editable form to the message input terminal 90 via the telecommunications networks 10, for display thereat.

The form includes check boxes for priority (high, medium or low), immediate display (yes or no), immediate auditory alarm (yes or no), and a box for an alpha numeric message to be typed, together with an indication of the message originator.

It also includes a list of standard text string options, which may comprise, for example, "please call back to the following number", "please call the office", and so on.

At the message input terminal 90 the user types in the message, supplies the telephone number of the called terminal, selects the required urgency and alerting modes from the check boxes listed above, and selects any desired text options from the options listed. The user then causes the form to be uploaded to the SMSC 90 (e.g. by pressing the "enter" key or selecting an "upload" button).

In step 1020 the SMSC 70 receives the completed form.

Next, in step 1030, the SMSC 70 creates the message to be transmitted. Rather than sending a normal short message to the telephone 2a to which it is addressed, in this embodiment, the SMSC 70 creates a data download point-to-point short message (SMS-PP) as defined in GSM 11.14, for reception by the SIM 35 as discussed in greater detail below.

It consists, as shown in Figure 12, of a header portion 2010 indicating that the message is a data download message (as disclosed in section 7.1 of GSM 11.14), followed by a portion 2020 containing codes indicating the priority and display command options selected by the user (e.g. one of the three possible priority values and so on); a portion 2030 indicating the originator of the SMS message, where given; a portion 2040 containing text option codes corresponding to any selected text options selected by the user; and finally, a portion 2050 containing the message text input by the user.

Finally, in step 1040 the SMSC transmits the short message to the selected destination terminal 2a via the appropriate satellite 4b. Briefly, the location of the terminal 2a is determined from the database station 15, and the message is routed to the appropriate earth station node 6a, which sets up a signalling link to the terminal 2a along which the message is transmitted.

### Message handling by terminal 2

Referring to Figure 6, in step 1110, the terminal 2a receives the message and in step 1120, when the terminal processor has determined the message is a data download message, the message is passed to the SIM 35 via the interface 33.

Referring to Figure 7, ins step 1210, the SIM processor 35a receives the message, and in step 1220 the SIM processor reads the codes in the message portion 2020 and determines the necessary actions from a lookup table (shown in Figure 11) stored in the SIM memory 35b.

Referring to Figure 11, for example, a first code may indicate that the command to be followed by the terminal 2 are; to display a first message text MSG1 (for example, " high priority SMS message received") and to generate an auditory alert, the commands to be repeated five times at intervals of three minutes unless the user reads the message. A code 2 may indicate that a second message text MSG2 is to be displayed (for example "message received").

A third code may indicate that auditory alert is to be generated and a fourth code may indicate that an auditory alert is to be generated which is to override any current call and is to be repeated five times at intervals of three minutes until the message is read.

Thus, the lookup table of Figure 11 specifies the commands (executable using the SIM toolkit of GSM 11.14) which the SIM 35 will pass to the terminal processor 37.

In step 1230, the SIM application 354 transmits the or each command specified in the lookup table via the interface 33 to the terminal processor 37.

The relevant commands are:-
- display text (GSM 6.4.1), in either normal priority or high priority (in which it replaces any existing display)
- play tone (GSM 11.14 section 6.4.5) in either normal or high priority

Next, in step 1240, the application 354 sends the terminal processor 37 the GET INKEY command (section 6.4.2 of GSM 11.14) to display text "retrieve message" (Y/N)", and awaits the answer. If (step 1240) the user presses an appropriate key, then the text of the message is displayed (step 1250).

If not, then the SIM processor application 354 selects the next command, if any, to be sent to the SIM and returns to step 1230. If a command repetition has been specified in the lookup table of Figure 11, the SIM application 354 causes the SIM 35 to wait for the specified time (for example 3 minutes) before outputting the next command (i.e. a repeat of the previous command).

Referring to Figure 6, on receipt of a command from the SIM 35 via the interface 33 the terminal processor 37 executes the commands (step 1140).

### Expanding text codes

Where the message contains codes in portion 2040, which specify text string options, the application 354 performs the process of Figure 10 in addition to that of Figure 7; that is, in step 1520 the text codes are extracted from the message portion 2040, and in step 1530 the corresponding strings of text, stored in the look up table in the SIM memory 35b is substituted within the message text 2050. Finally, in step 1540, the expanded message is stored in one of the SMS storage locations within the memory 35b, to be retrieved like a normal short message.

### Changing the Display Options

Referring to Figure 8, in this embodiment, the user and/or the network is able to alter the way in which received messages are treated, by rewriting the command lookup table shown in Figure 11.

For example, a company operating a fleet of vehicles equipped with terminals 2 may wish to change the way in which messages for all terminals are treated.

Accordingly, the fleet controller may prepare a mapping, table, mapping the received codes to sequences of SIM toolkit commands (and, where desired, mapping text codes to new strings of text). This table is supplied to the operators of the SMSC 70, at which an SMS-PP download message is prepared and transmitted to the terminal 2a.

At the terminal 2a, as discussed above, the message is recognised as an SMS-PP message and supplied to the SIM 35.

On receipt of the message (step 1320 of Figure 8), the SIM processor application 354 recognises the message specifying a replacement lookup command table, and replaces the current lookup table with the data specified in the message (step 1330).

The user of the terminal 2 may also wish to alter the handling of received messages (for example, to disable auditory alerts). Accordingly, in this embodiment the application 354 is arranged to use the SETUP MENU command of section 6.4.8 of GSM 11.14, to provide the user with a menu option of redefining the command table.

When this menu option is selected by the user through the keyboard 38 the SIM processor 35a uses the GET INPUT of section 6.6.3 of GSM 11.14 to receive replacement data controlling the handling of the receipt messages, and amends the lookup table (step 1330) accordingly.

### Message translation

Referring to Figure 1, where a connection between the PSC and SMSC exists (for example via the Internet), and it is desired to route a terrestrial paging message to a user via his satellite telephone 2, in addition to or as an alternative to terrestrial paging, the paging service centre 80 sends a copy of the paging message to the SMSC 70.

Referring to Figure 9, this message is received at the SMSC in step 1410.

In step 1420, the type of the paging message is determined (e.g. whether it is an ERMES, GOLAY, POCSAG, or HSC message) from its format or the identity of its originating PSC 80.

Where the message is in a format which includes priority encoding (for example, as in the ERMES or HSC formats) the priority information is extracted and an SMS-PP message is created (step 1030) as discussed above, using the extracting priority information within the codes 2020. For this purpose, the SMSC maintains a lookup table for each type of paging format, relating to the header information within the pager message to a priority code.

The converted message is then transmitted into step 1040, as discussed above.

Thus, the present embodiments may be employed to relay paging messages via a short message service, whilst retaining their original priorities.

By providing the extra functionality as an application (or part thereof) on an SIM card, and allowing the SIM card to control the operation of the terminal 2 using the tool kit routines, it is possible to make terminals which share some of the same components as GSM terminals. Thus, the cost of providing such terminals is reduced.

### OTHER EMBODIMENTS

Whilst, in the foregoing embodiments, transmission of priority indicators has been discussed, it would be possible instead to transmit data directly indicating the sequence of commands to be performed to the SIM 35 (although this would entail the transmission of larger volumes of data).

It will be understood that the emulation of priority features of paging messages and the control of the display and alerting to SMS messages, are not the only uses to which the present invention may be put.

For example, the present embodiment may also provide acknowledgement back services for received SMS messages by providing that the application on the SIM generates a short message, using the SEND SHORT MESSAGE procedure of section 6.4.10 GSM 11.14, repeating, for example, the first portion of the received message, and sends it to the network.

As well as acknowledging receipt, it would be possible to acknowledge the reading of the message by the user, by providing that the SIM generates a further return SMS message after the user has accessed the received message.

It would also be possible to provide an automatic ringback, by parsing, recognising or decoding a dial number in the received SMS, and using the SIM call control capabilities specified in GSM 11.14 Section 9.1

Although in the above embodiment the command data and message data are in the same SMS, they could be sent in separate SMS-PP messages, linked by some identifying data.

It will be clear from the foregoing that the above described embodiment is merely one way of putting the invention into effect. Many other alternatives will be apparent to the skilled person and are within the scope of the present invention.

The numbers of satellites and satellite orbits indicated are purely exemplary. Smaller numbers of geostationary satellites, or satellites in higher altitude orbits, could be used; or larger numbers of low earth orbit (LEO) satellites could be used. Equally, different numbers of satellites in intermediate orbits could be used.

Whilst TDMA is one suitable access protocol, CDMA is equally envisaged as possible.

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of handling a short message for a telephone terminal (1), including a control circuit (37) and a removable processor (35), delivered via a communications network (4, 6, 70), comprising the steps of providing message alerting commands; inserting command data (2020) representing said commands and message data (2040, 2050) defining said message into a short message together with control data (2010) indicating that the message is for said removable processor (35); transmitting said short message to said terminal (2); at said terminal (2), passing said short message to said removable processor (35); at said removable processor (35a), reading said command data and commanding said control circuit (37) to carry out said commands.

2. A method according to claim 1, in which said command data relates to visual display on a display device (39) of said terminal (2).

3. A method according to claim 1 or claim 2, in which said command data relates to audio output by an audio output device (34) of said terminal (2).

4. A method according to any preceding claim, further comprising the steps of receiving a pager message including control data controlling the alerting which would be used by a pager, and a text message; selecting said command data (2020) in dependence upon said pager control data; and selecting said message data (2040, 2050) in dependence upon said text message.

5. A method according to any preceding claim, further comprising the step of inputting an urgency and/or priority level, and selecting said command data (2020) in dependence thereon.

6. A method according to any preceding claim, further comprising the step of storing mapping data mapping said command data to corresponding commands executable by said control circuit (37).

7. A method according to claim 6, further comprising the step of inputting said mapping data to said network (70).

8. A method according to claim 6, further comprising the step of inputting said mapping data to said removable processor (35) via said terminal.

9. A method according to any preceding claim, in which the communications network (4, 6, 70) comprises a satellite link.

10. A mobile terminal for use in a method according to any preceding claim, said terminal being adapted to communicate with a satellite.

11. A removable processor module (35) for use in a telephony terminal (2), said module comprising a processor (35a) and memory (35b), and being for communication with said terminal (2) via a communications interface (33), said processor being arranged to receive a Short Message on a signalling channel, to extract therefrom alerting command data (2020) and message data (2040, 2050) and to issue commands to said terminal (2) to cause a user thereof to be alerted, in accordance with the command data (2020) and to selectively output a message corresponding to the message data (2040, 2050).

12. A removable processor module (35) according to claim 11, in which said commands cause visual display on a display device (39) of said terminal (2).

13. A removable processor module (35) according to claim 11 or claim 12, in which said commands cause audio output by an audio output device (34) of said terminal (2).

14. A removable processor module (35) according to any of claims 11 to 13, in which said message data comprises one or more codes (2040) indicating predetermined text strings, and in which said removable processor module (35) is arranged to output a message which includes the corresponding text strings.

15. A removable processor module (35) according to any of claims 11 to 14, in which said memory (35b) stores an operating system (352) and an application (354), under the control of which the removable processor module processor (35a) operates in use.

16. A removable processor module (35) according to claim 15, in which the operating system (352) is arranged to operate the SIM Toolkit procedures specified in GSM 11.14.
